(19) **Europäisches Patentamt / European Patent Office / Office européen des brevets**

(11) **EP 1 595 899 B1**

(12) **EUROPEAN PATENT SPECIFICATION**

(45) Date of publication and mention
of the grant of the patent:
**25.11.2009 Bulletin 2009/48**

(51) Int Cl.:
***C08F 292/00*** *(2006.01)*   ***C08L 33/24*** *(2006.01)*
***C08L 33/26*** *(2006.01)*

(21) Application number: **04700526.9**

(22) Date of filing: **07.01.2004**

(86) International application number:
**PCT/JP2004/000020**

(87) International publication number:
**WO 2004/072138 (26.08.2004 Gazette 2004/35)**

(54) **POLYMER GEL CONTAINING BIOCOMPATIBLE MATERIAL, DRY GEL, AND PROCESS FOR PRODUCING POLYMER GEL**

POLYMERGEL MIT BIOKOMPATIBLEM MATERIAL, TROCKENGEL UND HERSTELLUNGSVERFAHREN FÜR POLYMERGEL

GEL POLYMERE CONTENANT UNE MATIERE BIOCOMPATIBLE, GEL SEC ET PROCEDE DE PRODUCTION D'UN GEL POLYMERE

(84) Designated Contracting States:
**DE FR GB**

(30) Priority: **17.02.2003 JP 2003038046**
        **09.06.2003 JP 2003163539**

(43) Date of publication of application:
**16.11.2005 Bulletin 2005/46**

(73) Proprietor: **KAWAMURA INSTITUTE OF CHEMICAL RESEARCH**
**Sakura-shi**
**Chiba 285-0078 (JP)**

(72) Inventors:
• **HARAGUCHI, Kazutoshi**
**Inage-ku**
**Chiba-shi, Chiba 263-0001 (JP)**

• **TAKEHISA, Tooru**
**Chiba-shi, Chiba 261-0004 (JP)**

(74) Representative: **Albrecht, Thomas**
**Kraus & Weisert**
**Patent- und Rechtsanwälte**
**Thomas-Wimmer-Ring 15**
**80539 München (DE)**

(56) References cited:
**JP-A- 10 109 915      JP-A- 11 322 535**
**JP-A- 2002 053 629    JP-A- 2002 336 694**
**JP-A- 2002 340 855    US-A1- 2002 058 739**

• **DATABASE WPI Section Ch, Week 200351 Derwent Publications Ltd., London, GB; Class A14, AN 2003-535663 XP002373162 & JP 2002 340855 A (ZH KAWAMURA RIKAGAKU KENKYUSHO) 27 November 2002 (2002-11-27)**

**Description**

TECHNICAL FIELD

The present invention relates to a biocompatible substance-containing polymer gel useful in the fields of biochemistry, analytical chemistry, pharmacology, and medical treatment, etc., a dried product of the polymer gel, and a process for producing the polymer gel.

It should be noted that the present application is based on Japanese Patent Application No. 2002-201252, Japanese Patent Application No. 2003-38046, and Japanese Patent Application No. 2003-163539, the contents of which are incorporated herein by reference.

BACKGROUND ART

A polymer gel is a swollen body of a three-dimensional cross-linked structure formed from a polymerized body of a water-soluble organic monomer absorbed in water or an organic solvent, and such polymer gels are used widely in fields such as medical treatment and medicine, food, engineering, bio-engineering, and sport-related fields, as a material for a soft material, a high water-absorptive material, a medicine discharge control agent, an actuator, and a prosthetic device, etc. (for example, Gel Handbook, (volume by Yoshihito Nagata and Kanji Kajiwara: N.T.S. 1997).

Hitherto, in order to improve the physical properties of polymer gels, much research and development has been performed. For example, in order to increase gel strength, a method of surface bridge construction (United States Patent No. 5,314,420) and a method of conjugating with an inorganic material (Japanese Unexamined Patent Application, First Publication No. 2002-53629) have been reported. Moreover, in order to improve water absorptivity, a method of selecting a crosslinking agent (WO No. 94-20547) and a method of plasma polymerization (Yoshihito Nagata, Mitsuo Takase, the Chemical Society of Japan, Volume 3, page439, 1983), etc., have been reported.

Moreover, the inventors of the present invention reported that a polymer gel which has a three-dimensional network formed by conjugating a water-soluble organic polymer material and a stratified clay mineral had features such as excellent water absorptivity and very high tensility (European Patent Application, Publication No.1160286A1).

However, depending on the application use, there may be a case in which high water absorptivity or high tensility is not necessary, for example, if the gel is required to exhibit a low and stable swelling property even in water while maintaining a gel property which is not brittle, to have improved characteristics such as higher elastic modulus and strength, or to impart functionality such as biocompatibility to a polymer gel. With the above polymer gel, it was not possible to attain these characteristics sufficiently.

Moreover, in the field of medicine and medical treatment, in order to realize application to a cell culture gel, a contact lens, an absorptive hydrogel for medical treatments, a bio-adhesion gel, a medicine discharge control agent, a medical sensor, or the charge of a system engineering material, etc., the development of a gel material with improved dynamic physical properties and various functionality is strongly desired. For example, in order to create an artificial tissue body, a material is desired which has functionality such as lightness, biocompatibility, and responsiveness to thermal stimulation.

However, there is a problem in that this gel consisting of an organic crosslinked polymer formed using such an organic crosslinking agent (for example, Journal of Chemical Physics, in addition to T. Takigawa, Volume 113, No. 17, pages 7640 - 7645, 2000) has a low dynamic physical property and hence it is difficult to handle, is easily destroyed in use, and it is not possible to use it as a thin material.

Moreover, when protein was added to such an organic crosslinked polymer gel, the protein was likely to be unevenly dispersed, and there was a problem in that the content ratio and kind of protein that could be used were restricted, thereby the function of the protein could not be fully demonstrated.

In order to improve the dispersibility (uniform conjugation) of this protein, and to improve the functionality of the resultant gel, a method for producing a grafted combination of the organic crosslinked polymer and the protein was also reported (for example: Shoji Oya et al., edited by the Society of Polymer Science, Japan drafts, Volume 50, No. 10, 2180); however, a complex synthetic process is required and problems relating to poor dynamic physical properties and difficulty in handling were left unsolved.

DISCLOSURE OF THE INVENTION

It is an object of the present invention to provide a biocompatible substance-containing polymer gel which contains a biocompatible substance that is finely dispersed and excels in dynamic physical property and stability, and is capable of exhibiting the properties of the biocompatible substance efficiently, a dried biocompatible substance-containing polymer gel, and a process for producing the biocompatible substance-containing polymer gel.

The inventors of the present invention found that the gel, which contains water and a biocompatible substance in the three-dimensional network formed by complexing a water-swelling clay mineral at least a part of which is exfoliated in layers with a polymer of a water-soluble organic monomer obtained by polymerizing a water-soluble organic monomer such as N-alkyl acryl amide in the presence of water, a biocompatible substance or a raw material thereof, forms a biocompatible substance-containing polymer gel having excellent dynamic physical property, handling characteristics, stability, and functionality, and thus completed the present invention.

The present invention provides a polymer gel having a three-dimensional network formed by complexing a polymer of a water-soluble organic monomer with a water-swelling clay mineral, in which a biocompatible substance is present in the three-dimensional network.

Moreover, the present invention provides a dried biocompatible substance-containing polymer gel which is obtained by drying the polymer gel.

In addition, the present invention provides a process for producing a biocompatible substance-containing polymer gel including a step of polymerizing a water-soluble organic monomer in a uniform solution which contains the water-soluble organic monomer which forms a polymer of a water-soluble organic monomer after polymerization, with a water-swelling clay mineral, a biocompatible substance and water.

Furthermore, the present invention provides a process for producing a polymer gel including forming hydroxyapatite in a polymer hydrogel by impregnating an aqueous solution of phosphoric acid alkali metal salt and an aqueous solution of carbonate alternately one or more times with a polymer gel consisting of a water-soluble organic monomer and a water-swelling clay mineral.

BEST MODE FOR CARRYING OUT THE INVENTION

The polymer gel of the present invention is a hydrogel which contains water and biocompatible substances in a three-dimensional network formed by complexing a polymer of a water-soluble organic monomer and a water-swelling clay mineral, in which the biocompatible substances are dispersed finely in the gel which is constituted by the three-dimensional network formed by the polymer and the clay mineral exfoliated in layers. That is, as a result of chemical bonds, various interactions (such as ionic interaction, hydrogen bonding, hydrophobic interaction, and chelation, etc.), or intertwinement of the polymer, the biocompatible substances are dispersed finely and held within the three-dimensional network formed by the polymer of a water-soluble organic monomer and the clay mineral being complexed (crosslinked) with each other at the molecular level. It should be noted that in addition to the formation of a three-dimensional network of the polymer and the clay minerals, a case using partial crosslinking with an organic crosslinking agent or using radioactive rays (such as γ rays, electron beams, and ultraviolet light) in combination is also included. The case in which only the three-dimensional network consisting of the polymer and the clay minerals is formed is more preferable.

The water-soluble organic monomer used for forming the polymer of the polymer gel of the present invention has a characteristic of being water-soluble, and interacts with water-swelling clay minerals which can be uniformly dispersed in water, and the formed polymer constitutes a three-dimensional network with the clay minerals. For example, a water-soluble monomer having a functional group which can form a hydrogen bond, an ionic bond, a coordinate bond, a covalent bond, etc. with the clay minerals is preferred. Specifically, as the water-soluble organic monomer having these functional groups, an amide group, an amino group, a hydroxyl group, a tetra-methyl ammonium group, a silanol group, an epoxy group, etc., are exemplary, and among these, a water-soluble organic group having an amide group is particularly preferred. Moreover, the term water in the present invention includes a mixed solvent which contains a water-compatible organic solvent and water as the main component, in addition to water alone. As the water-soluble organic monomer having an amide group, specifically, acrylic amides such as an N-alkyl acryl amide, N, N-dialkyl acryl amide and acryl amide or methacrylic amides such as N-alkyl methacrylic amide, N,N-dialkylmethacrylic amide and methacrylic amide are exemplary. It should be noted that more preferably, N-alkyl acrylic amide, or N, N-dialkyl acrylic amide and a methacrylic amide are used, and particularly preferably, N-alkyl acrylic amide or N, N-dialkyl acrylic amide is used. As an alkyl group, one having a carbon number of 1 to 4 is preferably selected. As a polymer of such a water-soluble organic monomer, for example, poly (N-methyl acrylic amide), poly (N-ethyl acrylic amide), poly (N-cyclopropyl acrylic amide), poly (N-isopropyl acrylic amide), poly (acryloyl morpholine), poly (methacrylic amide), poly (N-methyl methacrylic amide), poly (N-cyclopropyl methacrylic amide), poly (N-isopropyl methacrylic amide), poly (N, N-dimethyl acrylic amide), poly (N, N-dimethyl aminopropyl acrylic amide), poly (N-methyl-N-ethyl acrylic amide), poly (N-methyl-N-isopropyl acrylic amide), poly (N-methyl-N-n-propyl acrylic amide), poly (N, N-diethyl acrylic amide), poly (N-acryloyl pyrrolidine), poly (N-acryloyl piperidine), poly (acryloyl methyl homo piperazine), poly (N-acryloyl methylpiperazine), and poly (acrylic amide) are exemplary.

Moreover, as the polymer of the water-soluble organic monomer, it is also effective to use a copolymer obtained by polymerizing a plurality of different water-soluble organic monomers selected from the above single water-soluble organic monomers, in addition to polymers obtained from the above single water-soluble organic monomers. Moreover, a copolymer of the water-soluble organic monomer and another organic solvent-soluble organic monomer can also be used if the obtained polymer shows water solubility and hydrophilic property.

The polymer of the water-soluble organic monomer in the present invention has hydrophilic property such as water solubility or hygroscopicity, or amphiphilic property, and among these, those having functionality whereby the property changes in response to heat, pH, solutes such as an inorganic salt, solvent composition, pressure or light, etc., or characteristics such as biocompatibility including bioabsorbability or biodegradability are preferably used according to use.

For example, a polymer of a water-soluble organic monomer having a characteristic such that the polymer's physical properties (for example, hydrophilic property and hydrophobic property) in an aqueous solution change dramatically depending on a small temperature change before and after the lower critical consolute temperature (Lower Critical Solution Temperature: LCST), and the like is exemplary. Specifically, poly (N-iso propyl acrylic amide), poly (N, N-diethyl acrylic amide), etc., are exemplary. The biocompatible substance-containing polymer gel of the present invention has a functionality such that its property (such as hydrophilic/hydrophobic property, volume, transparency, etc.) changes dramatically with such an external environmental change, in the state of containing the biocompatible substance, or that such a change can be reversed.

Moreover, as the polymer of a water-soluble organic monomer in the present invention, shrinking polymers which characteristically reduce their water content so as to be in equilibrium when the polymer hydrogel of the present invention is held in an aqueous atmosphere are preferably used according to use.

The equilibrium water content of the polymer gel using a shrinking polymer is controlled by changing the composition of the polymer hydrogel, for example, the ratio of the clay mineral to the water-soluble organic monomer, and further, can also be controlled by changing the various aqueous atmospheric conditions under which the polymer hydrogel is held, for example, the composition of the aqueous atmosphere, temperature, pH, or the amount of biocompatible substance or salts which are contained in the polymer hydrogel. As a shrinking polymer, for example, a poly methacrylic amide is exemplary.

The clay salt used for forming the polymer gel of the present invention possesses a swelling property in water, and those in which the space between layers characteristically swells in water are preferably used. More preferable are those in which at least a part is exfoliated in layers in water to become dispersed, and particularly preferable is a clay mineral in layers which is exfoliated in layers having a thickness from 1 to 10 layers or less in water so as to become uniformly dispersed. For example, a water-swelling smectite and a water-swelling mica, etc., are used, specifically, a water-swelling hectorite which contains sodium as an interlayer ion, a water-swelling montmorillonite, a water-swelling saponite, and a water-swelling synthetic mica, etc., are exemplary.

As the biocompatible substance contained in the polymer gel of the present invention, those which are contained in the gel stably, or those which are slowly released or are exuded to the gel surface, and those having no toxicity in a living body, especially a human body, those having bioactivity, those which are absorbed by the living body, those which help activity and growth of a living body, or those which demonstrate a beneficial effect are preferably used. Moreover, as such biocompatible substances, those having a fibrous shape or fine granular shape are used, and those which can be dispersed as molecules in the gel and those which are at least compatibile with water or a water-soluble solvent are preferable, and those which can be dissolved or dispersed finely in water are more preferable.

Specifically, as the biocompatible substance, a biopolymer such as a protein having bioabsorbability or biocompatibility, a polysaccharide, DNA, and cellulose, etc., sugars, a low-molecular-weight substance such as an amino acid, hydroxyapatite, a metal oxide such as a silica, a titania, and a zirconia, etc., or inorganic substances having biocompatibility such as a titania are exemplary. Here, as celluloses, those in which at least a part is water-soluble such as a carboxymethylcellulose, etc., are preferable. It becomes possible to increase dynamic property of the polymer gel such as shock absorption, vibration absorption, and low resilience, etc., by adding such a cellulose. As other biopolymers, esters such as polymaleic acid, or poly-β-hydroxybutyric acid, and polylactic acid etc. may also be used.

On the other hand, as a protein, any conjugated proteins such as a glycoprotein, a lipoprotein and a phosphorylated protein, etc., can be especially used without restriction in addition to proteins containing an oligopeptide or a polypeptide. These may be any of the proteins derived from a living body, synthetic proteins, or proteins produced by DNA recombination in bacteria, etc. The protein used for the present invention is in particular preferably a protein which has bioactivity, and for example, a serum protein, an enzyme, an immune response protein, a hormone protein, a protein which constitutes a living body tissue, a blood coagulation factor, a natural anti-thrombin factor, a cell adhesive factor, etc. are exemplary.

As a protein which has bioactivity, specifically, a serum protein such as an albumin, IgG, a macroglobulin, and a blood coagulation factor; enzymes such as an amylase, a protease, a lipase, a cellulase, an oxidase, and a dehydrogenase, etc.; immune response substances, such as a cytokine, a monoclonal antibody and a polyclonal antibody; a hormone protein such as insulin, glucagon, oxytocin, vasopressin, secretin, and ACTH, etc.; a protein which constitutes a living body tissue such as gelatin, collagen, fibrinogen, and gluten, etc.; cell factors, such as a fibronectin and growth factors, are exemplary.

Moreover, as a polysaccharide, antithrombogenic substances such as a chitin, chitosan, hyaluronic acid, alginic acid, pectic acid, starch, dextran, pullulan, sucrose, glucose, grape sugar, gum arabic, and gellan gum etc., heparin, chondroitin sulfate, heparan sulfate, and dermatan sulfate, etc., are exemplary.

These antithrombogenic substances may be either a natural product derived from a living body or an artificially synthesized product. Moreover, metal salt compounds such as sodium salt and potassium salt can also be used. In the polymer gel containing the antithrombogenic substance of the present invention, the antithrombogenic substance may be released gradually or quickly due to the passage of time and the surrounding environmental conditions change (external stimulus), in addition to the case in which the antithrombogenic substance contained therein remains stable regardless of the passage of time and the external environment. When it is released over time, it is possible to prepare an antithrombogenic substance such that the amount released per unit time can be controlled, and a release rate of, for example, 1 $\mu U/cm^3$ to 100 $mU/cm^3$ is exemplary. But these units don't indicate a unit of time, rather the release rate per unit volume. Moreover, among external stimuli that affect the release rate (external environmental factors), temperature, pH, solute concentration, solvent composition, stress, light, etc., are exemplary. It should be noted that in the present invention when the surface or all of the polymer gel is modified so as to be hydrophobic, since the hydrophobic surface has blood compatibility, it may be used as a blood-compatible material without containing any antithrombogenic substances. However, even in the case where the polymer gel contains antithrombogenic substances, it can still exhibit excellent blood compatibility in many cases. The polymer gel containing an antithrombogenic substance of the present invention does not coagulate even when it comes into contact with blood by fixing an antithrombogenic substance on the surface of the gel, or by emitting an antithrombogenic substance from the surface, and hence the polymer gel is useful in fields such as medical treatment and medicine, as a material having a high blood compatibility such as a wound covering material, an artificial organ, and regeneration medicine material.

The hydroxyapatite (HAp) used for the polymer gel of the present invention is a calcium phosphate compound represented by the structural formula $Ca_{10}(PO_4)_6(OH)_2$, for example, which is obtained by mixing a calcium hydroxide suspension with an aqueous phosphoric acid solution, or by mixing an aqueous calcium salt solution of 10 to 500 mmol/L with an aqueous dibasic alkaline metal salt phosphate solution, etc. In particular, a method of immersing the polymer gel in an aqueous dibasic sodium phosphate solution and an aqueous calcium chloride solution alternately is used effectively. It is known that HAp is contained in the bones of animals etc., and has excellent biocompatibility characteristics such as cell adhesiveness. In addition, particles of HAp, silica, and titanium, etc., prepared beforehand, are included in the reaction solution of the polymer gel, or a method for introducing such particles after polymer gel formation is also used. It should be noted that the content of HAp in the polymer gel is evaluated by wide angle X-ray measurement, and the content thereof is evaluated by thermogravimetric analysis. Furthermore, the dispersion of HAp is observed by scanning electron microscopy of the polymer gel or its dried product, or by transmission electron microscopy.

In the polymer gel of the present invention, HAp not only can be contained uniformly in an isotropic polymer gel, but it can also be contained in the polymer gel in an oriented state, or it can be contained such that the contents may differ depending on the location. For example, a polymer gel can be obtained, in which HAp is contained in a state where at least a part of the polymer gel consisting of the polymer of the water-soluble organic monomer and clay minerals is highly oriented in one axia direction or multiple axial directions. In this case, in the state where the chain of the polymer which constitutes the polymer gel (three-dimensional network) is extended, it forms a composite with HAp, and further, the HAp contained in the gel may be obtained in a state where the HAp is oriented in the stretching direction in the polymer gel, and this is effective for controlling the dynamic physical properties or the biocompatibility.

Furthermore, it is also possible to introduce HAp such that it differs depending on its location of the polymer gel, for example, such that the concentration thereof changes gradually from the surface to the inside, thereby allowing physical properties to be effectively controlled.

By being contained on the surface or inside the polymer gel of the present invention, biocompatible substances such as a protein, polysaccharide, and inorganic substance, etc., act efficiently when in contact with a living body, and further, a stable (continuous) effect can be achieved. For example, the biocompatible substance in the polymer gel exudes gradually to the surface of this gel when in contact with a human body together with water and a water-soluble solvent, thereby it becomes possible to supply it over a long period of time, and for the biocompatible substance on the surface or inside the gel to react over a long period with a substrate derived from a living body or which is synthesized. For example, it is exemplary that a trypsin hydrolyzes a protein or that a lipase hydrolyzes an aliphatic polyester, etc.

In order to improve the efficiency of the action of the biocompatible substance, it is effective to modify the shape of the polymer gel into a porous form, a thin film form, or fine particles, etc. Furthermore, as long as the characteristics of the biocompatible substance-containing polymer gel in the present invention can be maintained, it is also possible to add other components according to the purpose.

Although the solvent used for forming the polymer gel of the present invention is water, as long as formation of the biocompatible substance-containing polymer gel can performed, it may contain organic solvents which are compatible with water to form a uniform solution with a water-soluble organic monomer, clay minerals, or biocompatible substances. Moreover, as long as a uniform solution can be formed, an aqueous solution which contains salts etc., can also be used. As an organic solvent which is compatible with water, methanol, ethanol, propanol, acetone, methyl ethyl ketone, methyl isobutyl ketone, tetrahydrofuran, dimethyl acetamide, dimethyl formamide, dimethyl sulfoxide, and mixed solvents thereof are exemplary.

Moreover, the present invention provides a dried biocompatible substance-containing polymer gel which is obtained by drying the biocompatible substance-containing polymer gel of the present invention by a common method for removing a part or all of the water contained therein. The biocompatible substance-containing polymer gel can be easily regenerated by impregnating it with water or a solvent which is compatible with water. The dried biocompatible substance-containing polymer gel has dynamic physical properties which are superior to those of the biocompatible substance-containing polymer gel, is not bulky and is lightweight, making storage and transportation convenient.

As a preferable process for producing the biocompatible substance-containing polymer gel of the present invention, a uniform solution or a uniform dispersion liquid which contains the water-soluble organic monomer and the clay mineral constituting the polymerization raw materials of the polymer of the water-soluble organic monomer, water, and a biocompatible substance are prepared, and thereafter, the water-soluble organic monomer is polymerized. The clay mineral which is exfoliated in layers at nanometer level and dispersed in the uniform solution acts as a crosslinking agent at the time of polymerization of the water-soluble organic monomer to form a three-dimensional network of the polymer of the water-soluble organic monomer and the clay mineral, and a biopolymer is finely contained in the three-dimensional network.

In addition, it is also possible to combine previously a biocompatible substance with at least a part of a water-soluble organic monomer and/or clay minerals by a method such as covalent bonding, ionic bonding, coordinate bonding, and hydrogen bonding, or the like, and polymerizing the polymer gel using such bonding methods. Moreover, it is also possible to contain the biocompatible substance in the polymer gel by a method which includes preparing a polymer gel, and thereafter soaking the polymer gel in a state where the network density becomes decreased by swelling the gel, with the biocompatible substance, and then increasing the network density. However, it is difficult to prepare a biocompatible substance-containing polymer gel having excellent dynamic physical properties, functionality, and uniformity by a method which includes preparing each solution of a single linear polymer of a water-soluble organic monomer, clay minerals, and biocompatible substances, and thereafter simply mixing the solutions.

The polymerization reaction of the above water-soluble organic monomer or a water-soluble organic monomer which contains a biopolymer can be performed by, for example, radical polymerization using a common method, e.g. performing a reaction in the presence of a peroxide, heating, or ultraviolet radiation. A radical polymerization initiator and a catalyst may be selected from a conventional radical polymerization initiator and a suitable catalyst. Preferably, those having dispersibility in water and that can be wholly contained uniformly over a system are used. Particularly preferable is a cation type radical polymerization initiator having a strong interaction with the clay minerals which are exfoliated in layers. Although catalysts are used together with a radical polymerization initiator (redox polymerization) in order to adjust the molecular weight and the reaction velocity, in the synthesis of the polymer gel of the present invention, it is also possible to perform polymerization without using catalysts (non-redox polymerization), and in particular, in the case in which the catalyst is toxic to a living body, a system without a catalyst is more preferable.

Specifically, as a water-soluble peroxide as a polymerization initiator, for example, potassium peroxodisulfate, ammonium peroxodisulfate, a water-soluble azo compound, for example, VA-044, V-50, V-501, produced by Wako Pure Chem. Industries etc., are preferable. In addition, a water-soluble radical initiator having a polyethylene oxide chain can also be used.

Moreover, as a catalyst, N, N, N', N' - tetramethylethylene diamine, which is a tertiary amine compound, and β-dimethylamino propionitrile, etc., are preferable. The polymerization temperature is set to be in the range from 0°C to 100°C depending on the water-soluble organic monomer used, and the kind of polymerization catalyst and initiator, etc. Although the polymerizing time also differs depending on the polymerizing conditions such as the catalyst, an initiator, polymerizing temperature, and the amount of polymerization solution (thickness), and it cannot generally be specified, it is set in general to be within the range of from several tens of seconds to several tens of hours. It should be noted that in the gel of the present invention, since the polymerizing rate of the water-soluble organic monomer is high, it is possible to be used with without washing by combining using no catalyst, but it is more preferablr that it be used after washing by swelling, shrinkage, etc.

It should be noted that using a small amount of an organic crosslinking agent having at least bifunctionality together with a water-soluble organic monomer and a clay mineral, to introduce an organic crosslinking partially in addition to the three-dimensional network of the polymer and the clay minerals is also effective in the case where increasing the elastic modulus of the polymer gel or suppressing swelling is necessary. Moreover, radiating γ rays, electron rays, ultraviolet rays, etc., onto the polymer gel in which the three-dimensional network of the polymer and the clay minerals is formed is also employable for the same purpose.

On the other hand, as a method for introducing HAp as a biocompatible substance into the polymer gel which consists of a polymer of a water-soluble organic monomer, and a water-swelling clay mineral, although it is not necessarily limited, for example, a method which includes impregnating the polymer gel which consists of a polymer of a water-soluble organic monomer and a water-swelling clay mineral, with an aqueous phosphoric acid alkali metal salt solution, and thereafter impregnating the polymer gel with an aqueous calcium salt solution, or a method which includes impregnating the polymer gel with an aqueous calcium salt solution, and thereafter impregnating the polymer gel with an aqueous phosphoric acid alkali metal salt solution to form HAp in the polymer hydrogel is preferable. More preferably, a method of impregnating with an aqueous phosphoric acid alkali metal salt solution and impregnating with an aqueous calcium salt solution alternately a plurality of times is employed. Here, as a phosphoric acid alkali metal salt, disodium hydrogenphosphate, and dipotassium hydrogenphosphate, etc., are exemplary, whereas, as calcium salt, calcium chloride, and calcium carbonate, etc., are exemplary.

Moreover, it is also possible to form an inorganic substance-containing polymer gel by previously dispersing fine particles (having a size ranging from nanometer to micrometer level) of HAp, silica, or titania which are prepared separately, in a reaction aqueous solution, upon forming the polymer gel which consists of the polymer of a water-soluble organic monomer and a water-swelling clay mineral.

Furthermore, a method for forming HAp additionally which includes making such fine inorganic particles be contained in a polymer gel previously, and thereafter immersing the polymer gel in an aqueous phosphoric acid alkaline metal salt solution and an aqueous calcium salt solution is also effective to control and increase the dynamic physical properties, sliding property, swelling property and surface characteristics caused by an increase in the content of inorganic materials.

Since the biocompatible substance-containing polymer gel of the present invention excels in dynamic physical properties and ease of handling, it is possible to prepare a biocompatible substance-containing polymer gel having various sizes and shapes by designing the shape of a polymerization vessel or processing the gel shape after polymerization.

For example, it is possible to prepare a biocompatible substance-containing polymer gel having an arbitrary shape, such as a fibrous, rod, plate, cylindrical, spiral or spherical shape. Moreover, it is also possible to produce a biocompatible substance-containing polymer gel having a shape of fine particles, by a method of further using a common surface active agent in the above polymerization, or a method of polymerizing using a non-aqueous solvent together.

In the present invention, the ratio of the polymer of a water-soluble organic monomer and the clay mineral which constitute the biocompatible substance-containing polymer gel may be a value by which a gel structure can be formed having a three-dimensional network consisting of the polymer and the clay mineral, and further, although the ratio differs depending on the kind of polymer of a water-soluble monomer or clay mineral used, and hence the ratio cannot be generally determined, the mass ratio of the clay mineral to the polymer of one water-soluble organic monomer in an amount of 1 is preferably ranges from 0.01 to 10, more preferably ranges from 0.03 to 2.0, and particularly preferably ranges from 0.1 to 1.0. When the mass ratio of the clay mineral to the polymer of a water-soluble organic monomer in an amount of 1 is less than 0.01, sufficient gel characteristics cannot be obtained, whereas when the mass ratio is more than 10, the gel obtained is likely to be brittle.

On the other hand, the ratio of the biocompatible substance to the sum of the polymer of a water-soluble organic monomer and the clay mineral may be a value by which the biocompatible substance is finely dispersed so as to be contained in the three-dimensional network, and the rate differs depending on the kind, purpose, or use of the biocompatible substance, and hence the ratio is not especially limited. Specifically, the ratio is selected from a wide range from the concentration of the biocompatible substance at ppm level to several times the mass ratio of the sum of the polymer of a water-soluble organic monomer and the clay mineral, based on the functionality of the biocompatible substance and the gel uniformity, etc.

Usually, the ratio of the biopolymer which is a biocompatible substance to the sum of the polymer of a water-soluble organic monomer and the clay mineral preferably ranges from 0.1 to 30 mass %, and more preferably ranges from 0.5 to 10 mass %. Moreover, the mass ratios of the inorganic substance which has biocompatibility to the polymer of a water-soluble organic monomer preferably ranges from 0.01 to 10, more preferably ranges from 0.05 to 5, and particularly preferably ranges from 0.1 to 3.

The ratio of water to the sum of the polymer of a water-soluble organic monomer and the clay mineral can also be arbitrarily set to be a wide range from a value near zero to a very large value depending on the purpose by adjusting the amount of solvents in the polymerization solution, or by ranging the subsequent swelling or drying. Although the maximum quantity of water contained in the biocompatible substance-containing polymer gel obtained by the present invention changes according to the kind or the ratio of component of the polymer of a water-soluble organic monomer or of the clay mineral, or the environmental conditions such as temperature, and pH, etc., it is possible to change the ratio of the solvent contained substantially compared with the organic crosslinked gel of the polymer of the same conventional water-soluble organic monomer, while maintaining high dynamic physical properties.

The biocompatible substance-containing polymer gel of the present invention is a polymer gel which has a three-dimensional network formed by the polymer of a water-soluble organic monomer and the clay mineral without using any organic crosslinking agents, and has very high toughness compared to the gel which contains the biocompatible substance in the organic crosslinked gel (hereinafter referred to as "an organic crosslinked gel") of the polymer of the water-soluble organic monomer obtained by polymerizing using the conventional organic crosslinking agent. For example, in the case where the solvent contained in the biocompatible substance-containing polymer gel is water, and the mass ratio of water to one biocompatible substance is 10, a biocompatible substance-containing polymer gel of the present invention can be obtained having a breaking elongation in a tensile test of at least not less than 50%, better still, not less than 100%, even better, not less than 300%, and particularly preferable, not less than 500%.

Moreover, the tensile strength is also larger than those in which the biocompatible substance is contained in the organic crosslinked gel which does not contain general clay minerals. For example, in the case the solvent contained in the biocompatible substance-containing polymer gel is water, and the 1 mass ratio of water to one biocompatible substance is 10, biocompatible substance-containing polymer gel can be obtained having a tensile strength of at least not less than 5 KPa, better still, not less than 10 KPa, even better, not less than 30 KPa.

On the other hand, the biocompatible substance-containing polymer gel containing no clay minerals, which is obtained by carrying the biocompatible substance in the conventional organic crosslinked gel, is so weak compared to the biocompatible substance-containing polymer gel of the present invention that it cannot be installed into the chuck of the tensile tester, or it is broken immediately after the test starts, and hence the dynamic physical properties cannot be evaluated.

The biocompatible substance-containing polymer gel of the present invention exhibits excellent mechanical characteristics also with respect to other dynamic deformations, for example, it exhibits excellent toughness against a large compressing, pulling, or bending deformation. Specifically, the biocompatible substance-containing polymer gel of the present invention includes a biocompatible substance-containing polymer gel the shape of which is not destroyed even when it is compressed until the thickness thereof becomes not more than 1/3, and better still, not less than 1/5 of the thickness of the original thereof, and further, a biocompatible substance-containing polymer gel the shape of which is not destroyed even when it is bent at the center in the longitudinal direction, by an angle of not less than 100°, and better still, by an angle of not less than 150°.

The biocompatible substance-containing polymer gel of the present invention preferably has high transparency. Although this transparency differs depending on the ratio of the clay mineral to the polymer of a water-soluble organic monomer, the ratio of a biocompatible substance to the sum of the polymer of a water-soluble organic monomer and the clay mineral, kind, and the water content, etc., in a cylindrical gel having a diameter of 25 mm, in which the solvent contained in the gel is water, and of which the mass ratio of water to the polymer of one water-soluble organic monomer is 10, the total transmissivity is preferably not less than 50%, more preferably not less than 70%, and particularly preferably not less than 80%.

The polymer gel of the present invention has no brittleness as in a general organic crosslinked gel, has excellent dynamic physical properties, i.e. high elastic modulus and high strength, and excels in dynamic stability, sliding performance (low coefficient of friction, or low abrasion loss), and does not swell excessively, with a stable swelling property even in water, has high transparency, is easy to handle, and can exhibit the characteristics (for example, various bioactivities) of a biocompatible substance effectively over a long period, and hence the polymer gel of the present invention can be widely employed in the fields such as medical treatment and medicine, regeneration medicine material, food, engineering works, agriculture, bio-engineering, and sport-related fields, as a material such as various prosthetic devices including a soft material protective layer, a pressure dispersing element, a contact lens, a cell culture base material, high water absorptive material, a freshness maintenance agent, a medicine discharge control agent, a soil improvement agent, an actuator, and an artificial blood vessel.

In particular, in the case in which HAp is contained in the polymer gel, since characteristics such as cell adhesiveness can also be demonstrated, it can also be effectively used as a medical material such as an artificial muscle material besides the above-mentioned use, a cartilage material, and intervertebral disc material, and as a vibration and shock absorbing material etc.

BEST MODE FOR CARRYING OUT THE INVENTION

Subsequently, the present invention will be explained in more detail with Examples, but the scope of the present invention is not limited only to the Examples.

(Example 1)

A water-swelling hectorite (trademark LAPONITE XLG, produced by THE LOCKWOOD ADDITIVES CO., LTD.) which has a composition of $[Mg_{5.34}Li_{0.66}Si_8O_{20}(OH)_4]$ $Na_{0.66}^+$ was refined and dried to be used as a clay mineral. As a water-soluble organic monomer, N-isopropylacrylamide (NIPA: produced by KOHJIN CO., LTD.) was re-crystallized using a toluene/hexane mixed solvent to be refined into colorless needle-like crystals.

A gelatin produced by Wako Pure Chem. Ind., Ltd., which was a mixture derived from pig skin was used after being first prepared into an aqueous solution of 20 mass %.

As a polymerization initiator, a potassium peroxydisulfate (KPS: produced by KANTO CHEMICAL Co., Ltd.) was diluted with pure water at a rate of: KPS/water = 0.192 / 10 (g/g) into an aqueous solution. As a catalyst, N,N,N',N'-tetramethylethylenediamine (TEMED: produced by KANTO CHEMICAL Co., Ltd.) was used as it was. As water, pure water obtained by distilling ion-exchange water was subjected to bubbling with high purity nitrogen beforehand for not less than 3 hours to remove content oxygen therefrom, and the resultant water was used.

In a glass vessel containing a nitrogen atomsphere, a transparent, colorless solution consisting of 16.96 g of pure water and 0.662 g of LAPONITE XLG was prepared. Subsequently, 2.0 g of NIPA and 2 g of an aqueous gelatin solution were added thereto to obtain a yellowish transparent solution. Thereafter, in an ice bath, 16 μl of TEMED and 1.06 g of an aqueous KPS solution were added while agitating to obtain a colorless transparent solution.

A part of this solution was transferred to a glass tube having an inner diameter of 5.5 mm and a length of 150 mm, and was allowed to stand at 20°C for 15 hours to become polymerized. The remaining solution was also allowed to stand at 20°C for 15 hours in the glass container to become polymerized. It should be noted that all operations from the preparation of the solution to the polymerization were performed under a nitrogen atmosphere in the absence of oxygen.

After 15 hours inside the glass container and the glass tube a colorless, uniform, cylindrical gel having elasticity and toughness was produced.

Moreover, no uneven or opaque condensation derived from clay minerals, gelatin, etc., was observed at all in the gel. The gel was dried in a 100°C vacuum dryer until the mass became constant to obtain a dried gel. The synthesized gel was a hydrogel with a water content ([water / dried gel] $\times$ 100=) of 650 mass %, and the protein content ([protein/ (polymer of water-soluble organic monomer + clay minerals + protein)] $\times$ 100=) of the dried gel was 13 mass %. Refining of the gel was performed by immersing it in 2L of pure water for two days, three times in total, and thereafter immersing it in 1 L of water at 70°C for 2 hours.

The refined gel was dried to obtain a dried gel by removing water therefrom, and it was confirmed that the dried gel could be returned to a hydrogel having the same elasticity and shape as the gel before being dried by immersing the dried gel in water at 20°C. Fourier transform infrared absorption spectroscopy (FT-IR) of the dried gel was performed by the KBr method (Fourier-transform-infrared-spectroscopy photometer FT/IR-550 made by Jasco Corp. was used), and as a result, in addition to poly (N-isopropylacrylamide) (PNIPA) and gelatin, infrared absorption (for example, 460 $cm^{-1}$, 650 $cm^{-1}$, 1005 $cm^{-1}$) unique to LAPOLITE XLG was observed.

Moreover, thermal mass spectrometry of the dried gel was performed by heating the sample to 800°C at a rate of 10°C/minute in the presence of flowing air using TG-DTA220 made by SEIKO Electronic Industrial Inc., Co., to obtain a clay mineral /(polymer of water-soluble organic monomer + protein) = 0.276 (mass ratio). Furthermore, the dried gel was embedded in an epoxy resin, and an ultrathin section was prepared using an ultramicrotome to be measured at a 100-kV acceleration voltage using a high resolution electron microscope (JEM-200CX made by JEOL Co., Ltd.), and as a result, layers of clay which exfoliated in approximately 1 to 2 layers were observed.

Moreover, the swelling factor (rate of mass ratio) which is defined by the formula shown below when a gel having a diameter of 5.5 mm $\times$ 30 mm in length was held in an excess volume of ultra pure water for 10 days was 33-fold.

$$\text{Swelling factor} = \text{solvent} / (\text{polymer of a water-soluble organic monomer} + \text{clay minerals} + \text{protein})$$

It was confirmed that was a gel (hydrogel) was obtained which does not dissolve but which swells significantly in an aqueous solvent.

As mentioned above, it is concluded that in the gel obtained in this Example, the three-dimensional network in which PNIPA and the clay mineral are complexed with each other at a molecular level is formed in the water, and that gelatin is finely dispersed in the gel, because the gel obtained in this Example is a protein-containing polymer hydrogel which has a component ratio according to the preparation composition and which consists of the polymer (PNIPA) of a water-soluble organic monomer, gelatin, clay minerals, and water and, in spite of not having added a crosslinking agent in synthesizing PNIPA, it formed a colorless, clear, and uniform hydrogel, and the dried gel which is obtained by removing water from the hydrogel returns to the hydrogel having the original shape again by immersing the dried gel in water, and that almost the same hydrogel is formed even without using gelatin.

It should be noted that the polymer of a water-soluble organic monomer synthesized under the same conditions with the exception of not using the clay mineral became a viscous aqueous polymer solution, and a gel having high dynamic strength, which will be described below was not obtained therefrom.

A hydrogel which was shaped into a cylinder was subjected to a tension tester (Table type universal tester AGS-H made by Shimadzu Seisakusho Co., Ltd.) to perform a tension test under the conditions where the distance between evaluating points was 30 mm, and the drawing rate was 100 mm/minute. Here, a non-refined gel was used for evaluation while maintaining a constant water content. As a result, the tensile strength was 75.9 kPa, the breaking elongation was 796%, and the elastic modulus was 7.23 kPa. It should be noted that, when determining the elastic modulus, the gradient of a curve at a tension load of 0.05 to 0.3 N was used, and the initial cross-sectional area was used for both the tensile strength and the elastic modulus evaluation.

The protein-containing polymer gel obtained in this Example had toughness in the above, was transparent and swelled at a temperature below a specific temperature (Tc), whereas it became cloudy and shrank at a temperature above the Tc. The Tc of the gel obtained from the transparency measurement was 32°C. The transparency was measured for a gel stored in a plain glass vessel using NDH-300A made by Nippon Denshoku, Inc., while changing the temperature for total transmissivity. The total transmissivity was 4.2% at 33°C, 35.7% at 32°C, 89.1% at 30°C, and 90.1% at 20°C.

(Example 2)

Except for the water-soluble organic monomer, the same materials as in Example 1 were used, namely, the clay minerals, the polymerization initiator, the catalyst, and water. As the water-soluble organic monomer, N,N-dimethylacryl amide (DMAA: produced by Wako Pure Chem. Ind.) was used, after removing the polymerization inhibitor therefrom, using 80 ml of a silica gel column (made by Merck Co.) to 100 ml of DMAA.

In a glass vessel containing a nitrogen atomsphere, a transparent, colorless solution consisting of 47.55 g of pure water and 2.0 g of LAPONITE XLG was prepared. DMAA (4.95g) was added thereto to obtain a transparent and colorless solution. Furthermore, 25 g of heparin sodium (produced by SIGMA ALDRICH Co., Ltd., derived from pig intestinal-mucosa) (approximately 4500U) was added thereto, and it was agitated until it dissolved completely. Next, 2.5 g of an aqueous KPS solution and 40 µl of TEMED were added thereto, and a part of this solution was transferred to ten glass tubes having an inner diameter of 5.5 mm and a length of 150 mm, the tubes were stopped and allowed to stand in a thermobath held at 20°C for 20 hours to become polymerized.

It should be noted that all operations from the preparation of the solution to the polymerization were performed under a nitrogen atmosphere in the absence of oxygen. After 20 hours inside the glass tube a colorless, transparent, uniform, and cylindrical heparin-containing gel consisting of an organic polymer, clay minerals, and heparin, with elasticity and toughness was produced. Moreover, no uneven or opaque condensation derived from heparin was observed at all in the gel.

A heparin controlled-release measurement of this heparin-containing polymer gel was performed as follows. First, a heparin elution buffer solution was prepared as follows. Into a clean glass container, 0.3 g of tris-hydroxyaminomethane (produced by SIGMA ALDRICH Co., Ltd.) and 50 ml of ultrapure water were added, and it was agitated at room temperature to become dissolved. While agitating the solution, pH was adjusted to 7.4 by adding dropwise a small amount of hydrochloric acid, to obtain a tris-hydrochloric acid buffer solution (pH 7.4). Into this solution, 0.45 g of sodium chloride (produced by Wako Pure Chem. Ind.) was added to obtain a heparin effluent (tris-hydrochloric acid buffer solution (pH 7.4)). Next, both ends of the cylindrical heparin-containing polymer gel generated in the glass tube container were cut off to produce a sample having a diameter of 5.5 mm and a length of 5 cm. This sample was put in a 50-ml glass container, 50 ml (pH 7.4) of the tris-hydrochloric acid buffer solution prepared above was added thereto, and the container was stoppered. Thereafter, this glass container was put in a thermobath held at 37°C and allowed to stand there to elute heparin from the gel. Six hours, 12 hours, 24 hours, and 10 days later, 1 ml of the solution in which heparin was eluted was sampled, and each sample was stored in a clean glass container at room temperature.

The degree of controlled-release of the heparin eluted from the heparin-containing polymer gel was determined by measuring the change in concentration of the dissolved heparin for each sampling time. Measurement of the concentration of heparin in the solution was performed by measuring enzyme inhibitory activity using a test heparin (produced by DAIICHI KAGAKU YAKUHIN Co., Ltd.).

As a result, the concentration of heparin in each sampled solution was 50 mU/ml, 100 mU/ml, 200 mU/ml, and 400 mU/ml, at 6 hours, 12 hours, 24 hours, and ten days later, respectively, and it was confirmed that heparin had been control-released by immersing the heparin-containing hydrogel in the tris-hydrochloric acid buffer solution.

(Example 3)

Both ends of the cylindrical heparin-containing polymer gel obtained in Example 2 were cut off to produce a sample having a diameter of 5.5 mm and a length of 5 cm. This sample was put in a 50-ml plastic container, and cow blood was added after it had been treated with heparin to prevent clotting. Subsequently, after the plastic container was stored in a thermobath held at 37°C and allowed to stand, protamine sulfate (produced by NOVO NORDISK Co., Ltd.) was added to neutralize heparin in the cow blood. Then, it was held for 24 hours, while shaking the plastic container in an incubator. Twenty-four hours later, the plastic container was taken out from the incubator, opened, the gel inside the plastic container was taken out carefully, and put on a Schale to be observed with the naked eye, and as a result, no adhesion of thrombi could be seen.

Next, when the excess cow blood on the hydrogel surface was removed with a small amount of normal saline solution, the surface of the gel was almost as transparent as before immersing in it cow blood, no particular changes could be seen, and the blood compatibility of the heparin-containing polymer gel could be confirmed.

Moreover, the heparin-containing polymer gel was allowed to stand for one month in an atmosphere of 65% humidity and at 20°C, and thereafter the surface thereof was washed with water and dried to be subjected to a blood compatibility test similar to that above, and as a result, there was no adhesion of thrombi when blood compatibility was tested like above, no adhesion of thrombi could be seen on the surface the hydrogel, and the surface of the gel was almost as transparent as before immersing it in cow blood.

(Example 4)

As a result of performing a tensile test on the cylindrical heparin-containing polymer gel (cross-sectional area 0.237cm$^2$) obtained in Example 2 by the same method as Example 1, the breaking load was 1.3 N, the breaking elongation was 1200%, and the elastic modulus was 1.5 kPa. Moreover, when the optical transmittance of this cylindrical gel was measured in a similar manner to Example 1, the total transmissivity at 20°C was 85%, which was high transparency.

(Example 5)

A transparent, colorless, uniform and cylindrical heparin-containing polymer gel which consists of an organic polymer, clay minerals, and heparin was synthesized by the same method as Example 2 with the exception of using NIPA instead of DMAA as a water-soluble organic monomer.

This heparin-containing polymer gel exhibited characteristics such that the volume and the transparency change with the Tc, at a temperature below the Tc, it was transparent and swelled, whereas it became cloudy and shrank at a temperature above the Tc. When the transparency of the heparin-containing polymer gel was measured while changing the temperature by the same method as Example 1, the total transmissivity was evaluated to be 80% at 20°C, 75% at 30°C, 30% at 32°C, and 15% at 33°C. From this result, the Tc of the gel was evaluated to be 32°C.

When the amount of heparin eluted from the heparin-containing polymer gel was measured by allowing it to stand in a thermobath held at 37°C similar to Example 2, the eluted amount was 600 mU/ml, 1000 mU/ml, and 1300 mU/ml, respectively, 1 hour, 6 hours, and 24 hours later, and as a result, it was confirmed that heparin had been eluted from the heparin-containing polymer gel (DMAA heparin-containing gel) in this Example faster than the heparin-containing polymer gel in Example 2.

(Example 6)

Both ends of the cylindrical heparin-containing polymer gel obtained in the Example 5 were cut off to produce a sample having a diameter of 5.5 mm and a length of 5 cm. This sample was put in a 50-ml plastic container, and cow blood was added as in Example 3 after it had been treated with heparin to prevent clotting.

Subsequently, after the plastic container was stored in a thermobath held at 20°C and was allowed to stand, protamine sulfate was added to neutralize heparin in the cow blood. Then, it was held for 24 hours in an incubator at 37°C, while shaking the plastic container. Twenty-four hours later, the plastic container was taken out from the incubator, and the state of the gel was observed with the naked eye by the same method as Example 3, and as a result, no adhesion of thrombi could be seen. Next, when the excess cow blood on the hydrogel surface was removed with a small amount of normal saline solution, the surface of the gel was first cloudy because it was held at a temperature more above the Tc, but it returned to the colorless and became transparent similar to before immersing it in the cow blood after the temperature fell below the Tc. Moreover, no change could be seen in the transparency, and from this result, the blood compatibility of the heparin-containing polymer gel could be confirmed.

(Example 7)

By the same method as Example 2, a transparent, colorless, uniform and cylindrical heparin-containing polymer gel was prepared. Next, after taking out the polymer gel from the glass container and cutting it to a length of 50 mm, it was put in an air-tight polyethylene bag, and sealed so that it would not dry out.

Then, this heparin-containing polymer gel was irradiated with γ rays. Cobalt 60 was used as the radiation source and the level of radiation was set to 25 kGy. The polymer gel after radiation did not exhibit discoloration, deformation, or shrinkage, and was in almost the same state as the polymer gel immediately after polymerization. By optical transmittance measurement of the heparin-containing polymer gel after γ irradiation, it was confirmed that the total transmissivity at 20°C was 85%, thus demonstrating high transparency.

The heparin-containing polymer gel after γ irradiation was immersed in ultrapure water by the same method as Example 1 to measure the change in swelling factor, and as a result, the swelling factor 7 days after immersing was 15-fold, and the swelling factor 10 days after immersing was the same. On the other hand, the same measurement was also performed on the heparin-containing polymer gel which had not been subjected to γ radiation, and as a result, the swelling factor 7 days and 10 days after immersing, respectively, were 30-fold and 38-fold, respectively. These results revealed that the swelling of the polymer gel which had been irradiated with γ rays was less than that of the gel which had not been irradiated with γ rays and would reach a state of equilibrium faster than the gel which had not been irradiated with γ rays, and the swelling action in water was considerably suppressed compared with the non-irradiated polymer gel.

Next, a tensile test was performed on the heparin-containing polymer gel irradiated with γ rays by the same method as Example 4 revealing that the breaking elongation was 415%, the breaking strength was 70 KPa, and the elastic modulus was 12.2 kPa, and it was found that the physical properties of the heparin-containing polymer gel had shifted to a higher elastic modulus value and a lower breaking elongation value, due to the γ rays irradiation, but the heparin-containing polymer gel still had excellent dynamic physical properties without affecting in handling ease.

Furthermore, the cow blood immersing experiment on the heparin-containing polymer gel irradiated with γ rays was performed by the same method as Example 3. The surface of the polymer gel 24 hours after immersion in the cow blood was almost as transparent as the state before the cow blood immersion and the state 24 hours after the immersion of the heparin-containing polymer gel which was performed in Example 3, no particular change could be seen, and the blood compatibility of the γ-ray irradiated heparin-containing polymer gel could be confirmed.

(Example 8)

A heparin-containing polymer gel film was prepared by the same method as Example 2 with the exception of polymerizing such that a gel film with a thickness of 2 mm could be formed in a plastic container with a lid having a width of 80 mm × a length of 150 mm, instead of polymerizing by agitating a mixed liquid consisting of clay minerals, DMAA, heparin sodium, KPS and TEMED in a glass tube, in the Example 2. When this gel film was cut in 2 cm × 5 cm in length and the degree of the eluted heparin was measured by the same method as Example 2, the same results as for the cylindrical gel sample were obtained.

(Example 9)

A polymer gel was prepared by the same method as Example 1 with the exception of using 17.96 g of pure water, adding 1.0 g of an aqueous solution of collagen (Type I, brand name Cellmatrix: produced by NITTA GELATIN Co., Ltd.) having a concentration of 3.0 mg/ml instead of adding 2 g of an aqueous solution of gelatin, and polymerizing by performing flow casting such that a gel film with a thickness of 2 mm could be formed in a plastic container with a lid having a width of 80 mm × a length of 150 mm, instead of polymerizing in a glass tube. As a result, an almost colorless, transparent, uniform and sheet-like collagen-containing polymer gel having elasticity and toughness was produced in a plastic container. The collagen-containing polymer gel thus produced was refined by the same method as Example 1, and thereafter, the resultant gel was put in a sealed container and allowed to stand in an incubator held at 37°C. It should be noted that the ultraviolet absorption spectrum of the pure water used for refining was measured using a UV near infrared absorption-spectrum measuring apparatus (U-3500 made by HITACHI SEISAKUSHO CO., LTD.), and as a result, no ultraviolet absorption spectrum derived from collagen was observed, but it was confirmed that all of the collagen was held in the polymer gel. Moreover, the contact angle of water against this collagen-containing polymer gel film surface was measured using an angle-of-contact measuring apparatus ("CA-X200" made by KYOWA KAIMEN KAGAKU Co., Ltd.) revealing that it was 60° in a state where it was held at 37°C, and a hydrophobic state was confirmed. After cutting the refined polymer gel having a shape of a sheet into a diameter of 8 cm and moving it into a dish for cell cultures ("Falcon 3003" by BECTON, DICKINSON LAB and CO.), a lid was put on and the dish was allowed to stand at 37°C. It should be noted that all operations from refining to moving the polymer gel to a cell culture dish were performed on a clean bench.

Next, the following cell culture tests were performed using this sheet-like polymer gel in a cell culture dish. A cancer cell line, HepG2, derived from human liver epithelial cell(produced by Dainippon Pharmaceutical Co., Ltd.) was used for the cell culture. Cultivation was performed in an incubator containing 5% carbon dioxide and held at 37 °C, using Eagle's minimum essential medium (produced by SIGMA) (pyruvic acid (produced by ICN) and nonessential amino acids (produced by ICN) are contained as an additive) which contains 10% of cow embryo serum (produced by ICN). One week after seeding, a part of one end of the sheet-like polymer gel was cut off and was allowed to stand in a thermobath held at 20°C for 5 minutes, and then the surface thereof was observed with an optical microscope, revealing that the cells had adhered onto the polymer gel sheet, and had proliferated considerably. The entire cell population cultivated on the sheet-like polymer gel was removed from the polymer gel-containing dish in which this cultivation was performed, and was moved to a tissue culture dish containing the Eagle's minimum essential medium containing 10% cow embryo serum beforehand held at 20°C. The cells were covered and allowed to stand for 10 minutes at 20°C. Then, the proliferated cells were removed from the polymer gel sheet with tweezers. At this time, there was no damage to the polymer gel at all, and no adhered objects could be seen on the sheet-like cells, either. The sheet-like cells thus taken out were subjected to trypsin-EDTA treatment and each cell was individually separated, and thereafter the number of living cells was measured by trypan blue staining, and it was confirmed that the initial number of cells, i.e. $2.5 \times 10^6$ at the time the cultivation started, had increased after the cultivation to $3.1 \times 10^7$.

It was confirmed from the above result that this collagen-containing polymer gel can used as a cell culture base material which is effective for both growing cells and producing cells in a sheet-like form.

(Example 10)

A transparent, colorless solution consisting of 18.96 g of pure water and 0.662 g of LAPONITE XLG was prepared in a glass container. DMAA (1.76 g) and subsequently 0.2 g of cow trypsin (which is derived from cow pancreas, and produced by SIGMA ALDRICH Co., Ltd,) were added thereto, while agitating, to obtain a slightly yellowish, transparent solution. Subsequently, 16 μl of TEMED and 1.06 g of an aqueous KPS solution were added thereto to obtain a transparent, colorless solution.

After moving this solution to a plastic container of 8 cm in length×15 cm in width, it was sealed with a stopper and polymerized by being allowed to stand for 15 hours at 20°C. It should be noted that all operations from preparing the solution to polymerizing were performed under an oxygen-free nitrogen atmosphere. Fifteen hours later, a transparent, colorless, uniform film-like gel having elasticity and toughness was produced in the plastic container. No uneven or opaque condensates derived from clay minerals, trypsin, etc., were observed in the gel.

The obtained gel was immersed in 100 ml of pure water, and allowed to stand at 20°C for 72 hours. At 24 hours and 48 hours after the immersion started, a 1-ml aliquot was sampled from the pure water in which the gel had been immersed, and stored in a refrigerator held at 4°C. The gel was taken out 72 hours after the immersion started, and the pure water in which the gel had been immersed was sampled. The ultraviolet absorption spectrum was measured, in the three samples of gel-immersing water, revealing that no absorption peaks which could be considered to be derived from trypsin were observed in any of the samples. From this result, it was confirmed that in this trypsin-containing gel, no trypsin elution would occur by immersing the trypsin-containing gel in pure water.

Next, the trypsin activity of the obtained trypsin-containing gel was measured. Tris- hydrochloric acid buffer solution (pH 7.4) was prepared similarly to Example 2, and subsequently the trypsin-containg gel was cut to 0.5 cm × 0.5 cm in size, and was immersed into 10 ml of tris hydrochloric acid buffer solution. L-BAPA (produced by the PEPTIDE RESEARCH INSTITUTE) was added thereto as a synthetic substrate after having been measured by a well-known enzyme activity measuring method using a synthetic substrate, and as a result, a trypsin activity of $2.0 \times 10^{-7}$ mol/l was confirmed in the tris buffer solution being in contact with the trypsin-containing gel.

(Examples 11 and 12)

A hydrogel was prepared by polymerizing by the same method as Example 1, with the exception of using 1.76 g of DMAA in Example 11, and using 2.24 g ofN, N-diethyl acryl amide (DEAA: produced by Wako Pure Chem. Industries) in Example 12 as a water-soluble organic monomer, and using 1.796 g of water and 1 g of an aqueous gelatin solution in Examples 11 and 12. It should be noted that DEAA was used after removing the polymerization inhibitor therefrom using a silica gel column (made by Merck Co.) as well as for DMAA.

As a result, a uniform, opaque protein-containing gel having elasticity and toughness was obtained. The total transmissivity at 20°C of the gel stored in a glass container was 63.1 % (Example 11) and 9.8% (Example 12). As a result of performing a tensile test similarly to Example 1, the tensile strength, the breaking elongation, and the elastic modulus were 120 kPa, 1436%, and 5.78 kPa, in the Example 11, and 159 kPa, 668 %, and 15.5kPa in the Example 12, respectively.

(Example 13)

In Example 13, a hydrogel was prepared by polymerizing by the same method as Example 1, with the exception of using 0.01 g of albumin (which is derived from cow serum, and produced by SIGMA ALDRICH Co., Ltd,) instead of an aqueous gelatin solution, using 18.96 g of water, and changing the quantity of the clay mineral (LAPONITE XLG XLG) to 0.66 g.

As a result, a uniform, slightly opaque protein-containing gel having elasticity and toughness was obtained. The total transmissivity at 20°C of the gel stored in a glass container was 76.8%. The temperature-dependent change in transparency measured similarly to Example 1 was 63.9% at 30°C, 41.3% at 32°C, 26.2% at 33°C, and 0% at 35°C, and Tc was 33°C. In addition, as a result of performing a tensile test similarly to Example 1, the tensile strength, the breaking elongation, and the elastic modulus were 86.5 kPa, 705%, and 10.4 kPa, respectively.

(Example 14)

A gelatin-containing gel was prepared by the same method as Example 1 with the exception of using 1.5 g of methacrylamide (produced by SIGMA ALDRICH Co., Ltd.) instead of NIPA as a water-soluble organic monomer, and polymerizing the gel preparation liquid as it was in a glass container. As a result, a uniform, white gelatin-containing gel with elasticity and toughness was obtained. This gel shrank with the passage of time after polymerization, and released water gradually until it reached a steady quantity. The volume of the isolated water released from the gel over 15 hours after the polymerization started was 4 ml. The entire gel and the glass container which stored the gel were allowed to stand in a thermobath held at 20°C, and as a result, the volume of the isolated water released from the gel became 13 ml after one week. It should be noted that although the amount of isolated water was measured after one further week, it was 13 ml, and no increase in the amount of isolated water could be observed. Finally, a polymer gel uniformly containing gelatin and having a water content of 273% was obtained.

(Example 15)

A polymer gel was prepared by polymerizing similarly to Example 1, with the exception of using 1.76 g of DMAA as a water-soluble organic monomer, and not using an aqueous gelatin solution. This polymer gel exhibited rubber-like dynamic physical properties having high extensibility (tensile maximum elongation = 1350%), and a large swelling property (the equilibrium swelling factor at 20°C (= the gel weight at the time of equilibrium swelling/dried gel weight) = 87), and as a result, it was concluded that the polymer of a water-soluble organic monomer and the clay mineral had constituted a three-dimensional network. Moreover, as a result of performing a compression test (using a table type universal tester AGS-H made by SHIMADZU SEISAKUSHO Co., Ltd., compression speed 0.5 mm/second, compressibility = 50%) using the polymer gel cut into a cubic test piece of 1-cm cube, the result shown in Comparative Example 4 was obtained.

Incorporation into the gel of HAp was performed as follows using this polymer gel. Two kinds of HAp-forming solutions were prepared in the following ways. First, solution-1 was prepared by adding 4.44 g of calcium chloride (anhydrous) (produced by Wako Pure Chem. Industries) to tris-hydrochloric acid buffer solution (pH 7.4), and dissolving it therein. Moreover, solution-2 was prepared by adding and dissolving 8.6 g of disodium hydrogenphosphate-12-hydrate (produced by Wako Pure Chem Industries) in 192 ml of pure water.

Next, the weight of the gel cut off such so as to form a cylinder with a length of 5 cm or a cube of 1 cm square was measured, and thereafter each was put into a flat bottomed glass container one by one, and 30 ml of solution-1 was added and allowed to stand in a thermobath held at 37°C (process 1). Two hours later, the polymer gel was taken out from the flat bottomed glass container and the weight was measured, and thereafter it was moved immediately to another flat bottomed glass container in which 50 ml of pure water was charged, and an excess of solution-1 that had adhered to the outer surface of the gel was removed (process 2). The obtained gel was as transparent, colorless and uniform as the first polymer gel. Furthermore, this gel was put in a flat bottomed glass container, and 30 ml of solution-2 was added thereto and allowed to stand in a thermobath held at 37°C (process 3). Two hours later, the gel was taken out and the weight thereof was measured, and thereafter it was moved to a glass container in which pure water was charged, and an excess of solution-2 that ha adhered to the outer surface of the gel was removed (process 4). The obtained gel was slightly opaque, and uniformly white. This gel was immersed again in a new solution-1, and processes 1 to 4 were repeated such that each process was performed five times in total. The obtained gel was hard and perfectly white, but no uneven condensates, etc., could be observed. This gel was successively dried under 100°C decompression in the atmosphere for 24 hours to obtain a dried gel from which water had been removed. On this dried gel, thermogravimetric analysis (heated to 600°C at a rate of 10°C/minute, under circulating air) was performed, the result of which is as follows: (clay mineral + HAp) /organic polymer =1.53 (mass ratio), and it was confirmed that the inorganic compound had been introduced in addition to the clay mineral. Moreover, it was confirmed by performing wide angle X-ray diffraction of this dried gel, and Fourier transform infrared absorption-spectroscopy (FT-IR) that the inorganic compound introduced was HAp. Moreover, by thermogravimetric anlysis, the mass ratio of HAp to the water-soluble organic monomer polymer was 0.48. As mentioned above, it was concluded that according to this Example, a HAp-containing polymer gel was obtained in which the HAp was uniformly formed into the polymer gel in which the polymer of a water-soluble organic monomer and the clay mineral form a three-dimensional network in water.

Moreover, as a result of performing a compression test using the obtained polymer gel having a cubic shape, the value of the elastic-modulus = 14 kPa and the strength at the time of 50% deformation = 400 kPa. Moreover, the equilibrium swelling factor (= gel weight at the time of equilibrium swelling/dried gel weight) measured in water at 20°C was 25. From these results, it was confirmed as compared to the polymer gel before introducing HAp that the HAp-containing polymer gel has attained a high elastic modulus and strength, and a low equilibrium swelling factor in water.

(Example 16)

Colorless, transparent, and uniform polymer gels consisting of an organic polymer and clay minerals having a cylindrical shape or a cubic shape, were prepared by the same method as Example 15, with the exception of using NIPA as a water-soluble organic monomer instead of DMAA. These polymer gels exhibited rubber-like dynamic physical properties having high extensibility (tensile maximum elongation = 950%), and large swelling property (equilibrium swelling factor at 20°C = 48), similarly to Example 1. A white gel which uniformly contained HAp was prepared by incorporating HAp into a polymer gel, similarly to Example 15, with the exception of repeating the processes twice using this polymer gel. The mass ratio of the HAp to the polymer of a water-soluble organic monomer in the obtained HAp-containing polymer gel was 0.28. As a result of performing the compression test of the polymer gel similarly to Example 15, the value of the elastic modulus = 14 kPa, and the strength at 50% deformation = 330 kPa. Moreover, the equilibrium swelling factor measured in water at 20°C was 15.

(Example 17)

A film-like polymer gel was prepared by the same method as Example 15 with the exception of using a plastic container as a polymerization container. The HAp was incorporated into the polymer gel similarly to Example 15 using the obtained uniform transparent polymer gel film (thickness of 1 mm) with the exception of repeating the processes 10 times. The obtained polymer gel (film) was a white gel which uniformly contained HAp, and the mass ratio of the contained HAp to poly (N, N-dimethylacrylamide) was 2.1.

(Example 18)

A cylindrical polymer gel was prepared by the same method as Example 17 with the exception of using a glass tube container having an inner diameter of 5.5 mm and a length of 150 mm as a polymerization container. HAp was incorporated into the polymer gel similarly to Example 17, with the exception of stretching monoaxially the obtained cylindrical uniform transparent polymer gel to be extended to be 7 times the original length and then fixing the length in the state of being stretched. In the obtained HAp-containing polymer gel, the HAp was incorporated into the polymer gel which was in the state of being stretched, and even after a fixing jig was removed, the gel remained in the state of being stretched. From this result, it was concluded that the HAp was incorporated into the extended three-dimensional network. The mass ratio of the contained HAp to poly (N, N-dimethylacrylamide) was 0.78.

(Example 19)

White, uniform polymer gels having a cylindrical shape or cubic shape, each of which consists of an organic polymer and clay minerals, were prepared by the same method as Example 15, with the exception of using methacrylamide as a water-soluble organic monomer instead of DMAA. A polymer gel composite material was prepared using this polymer gel by incorporating HAp into the polymer gel similarly to Example 15. The obtained polymer gel composite material was a white gel which uniformly contained HAp, and the mass ratio of the contained HAp to poly (methacrylamide) was 0.55. As a result of performing the compression test of the polymer gel composite material similarly to Example 17, the value of the elastic modulus = 85 kPa, and the strength at the time of 50% deformation = 1.5 MPa. Moreover, the equilibrium swelling factor measured in water at 20°C was 8.3.

(Example 20)

From the polymer gel composite material obtained in Example 15, the water contained therein was removed slowly by drying to make the water content (= the gel composite material weight/the solid content weight in the gel composite material) equal to 0.5. As a result of performing the compression test on the HAp-containing polymer gel similarly to Example 15, the value of the elastic modulus = 1 MPa and the strength at the time of 10% deformation = 10 MPa.

(Comparative Examples 1 and 2)

Polymerization was performed at 20°C for 15 hours by the same method as Example 1 for Comparative Example 1, and as Example 13 for Comparative Example 2, with the exception of using no clay minerals, and adding an organic crosslinking agent containing 5 mol % of NIPA after adding the NIPA water-soluble organic monomer.

As the organic crosslinking agent, N, N'-methylenebisacrylamide (BIS) (produced by KANTO KAGAKU Co., Ltd.) was used as it was. As a result, an opaque, fragile gel was obtained in both Comparative Examples 1 and 2. As a result of measurement similar to Example 1, it was confirmed that the water content ([water/(polymer of a water-soluble organic monomer + protein)]×100) was 810 mass % (Comparative Example 1), 960 mass % (Comparative Example 2), and that the swelling factor [water/(water-soluble organic monomer weight + protein)] after a gel having a diameter of 5.5 mm × a length of 30 mm had been held for 10 days in a large amount of water was 9.0-fold(Comparative Example 1), and 10.7-fold(Comparative Example 2), and that it was an organic crosslinked hydrogel which contained protein. The total transmissivity at 20°C was 1% (Comparative Example 1) and 0.9% (Comparative Example 2), and no transparency change due to temperature was exhibited. Moreover, although a tensile test was attempted by the same method as Example 1, since in both Comparative Examples 1 and 2 the strength was low and the test pieces were fragile and destroyed easily, it was not possible to apply the test pieces to a tensile tester.

(Comparative Example 3)

A heparin-containing polymer gel was polymerized by the same method as Example 2 with the exception of adding no clay minerals, and adding an organic crosslinking containing 5 mol % of the monomer after adding a DMAA monomer. As the organic crosslinking agent, N, N'-methylenebisacrylamide was used as it was. As a result, an opaque, fragile gel was obtained. The optical transmittance at 20°C of this gel was 1%. Moreover, although a tensile test was attempted similarly to Example 4, since the strength was low and the test pieces were fragile and destroyed easily, it was not possible to apply test pieces to a tensile tester.

(Comparative Examples 4 and 5)

A compression test as performed on the polymer gel having a cubic shape before the HAp was contained therein obtained in Example 15 was performed on Comparative Example 4, and was obtained in Example 16 as for Comparative Example 5, and as a result, the compressive elasticity modulus was 1.5 kPa (Comparative Example 4), 3.1 kPa (Comparative Example 5), and the strength at 50% of compressibility was 200 kPa (Comparative Example 4) and 260 kPa (Comparative Example 5). Moreover, the equilibrium swelling factor in water at 20°C was 87 (Comparative Example 4) and 48 (Comparative Example 5).

INDUSTRIAL APPLICABILITY

The biocompatible substance-containing polymer gel of the present invention contains finely dispersed biocompatible substances, and has excellent dynamic physical properties and stability and can demonstrate the characteristics of the biocompatible substances efficiently. By making a dried biocompatible substance-containing polymer gel produced by drying the above biocompatible substance-containing polymer gel contain solvents such as water or an organic solvent which is compatible with water, the biocompatible substance-containing gel can be easily regenerated. The dried biocompatible substance-containing gel has dynamic physical properties superior to those of the biocompatible substance-containing gel, and is further lightweight and can be easily stored and transported.

**Claims**

1.    A polymer gel comprising a three-dimensional network formed by complexing a polymer of a water-soluble organic monomer with a water-swelling clay mineral, wherein the three-dimensional network contains a biopolymer or an inorganic substance having biocompatibility therein.

2.    The polymer gel as set forth in claim 1, wherein the biopolymer is a protein which has biocompatibility.

3.    The polymer gel as set forth in claim 2, wherein the protein which has biocompatibility develops bioactivity on the surface of or inside the polymer gel.

4.    The polymer gel as set forth in claim 1, wherein the biopolymer is an antithrombogenic substance.

5.    The polymer gel as set forth in claim 1, wherein the inorganic substance having biocompatibility is hydroxyapatite.

6.    The polymer gel as set forth in any one of claims 1 to 5, wherein the three-dimensional network is formed without using an organic crosslinking agent.

7.    The polymer gel as set forth in any one of claims 1 to 6, wherein the weight ratio of the water-swelling clay mineral to the water-soluble organic monomer ranges from 0.01 to 10.

8. The polymer gel as set forth in claim 1, wherein the biopolymer ranges from 0.1 to 30 mass % to the sum total mass of the polymer of the water-soluble organic monomer and the water-swelling clay mineral.

9. The polymer gel as set forth in claim 1, wherein the weight ratio of the inorganic substance having biocompatibility ranges from 0.01 to 10 to the polymer of the water-soluble organic monomer.

10. The polymer gel as set forth in any one of claims 1 to 9, wherein the water-soluble organic monomer is a water-soluble organic monomer having an amide group.

11. The polymer gel as set forth in claim 10, wherein the water-soluble organic monomer has an N-alkyl group-substituted amide group.

12. The polymer gel as set forth in any one of claims 1 to 11, wherein the water-swelling clay mineral is a water-swelling smectite.

13. The polymer gel as set forth in any one of claims 1 to 12, wherein a tensile breaking elongation is not less than 50% and a breaking strength is not less than 5 kPa when the mass ratio of water to the water-soluble organic monomer is 10.

14. The polymer gel as set forth in any one of claims 1 to 13, wherein the polymer gel is used as a medical material.

15. A dried gel obtained by drying the polymer gel as set forth in any one of claims 1 to 14.

16. A process for producing a polymer gel, comprising: polymerizing a water-soluble organic monomer in a uniform solution which contains the water-soluble organic monomer, a water-swelling clay mineral, a biopolymer or inorganic substance having biocompatibility and water.

17. The process for producing a polymer gel, as set forth in claim 16, wherein the mass ratio of the water-swelling clay mineral to the water-soluble organic monomer ranges from 0.01 to 10.

18. A process for producing a polymer gel comprising:

   forming hydroxyapatite in a polymer hydrogel by impregnating an aqueous solution of a phosphoric acid alkali metal salt and an aqueous solution of carbonate alternately one or more times with a polymer gel consisting of a water-soluble organic monomer and a water-swelling clay mineral.

19. The process for producing the polymer gel as set forth in claims 16 to 18, wherein the water-soluble organic monomer is a water-soluble acrylic type monomer having an amide group, and the water-swelling clay mineral is a water-swelling smectite.

**Patentansprüche**

1. Polymergel, umfassend ein dreidimensionales Netzwerk, gebildet durch Komplexieren eines Polymers eines wasserlöslichen organischen Monomers mit einem in Wasser quellenden Tonmineral, wobei das dreidimensionale Netzwerk ein Biopolymer oder eine anorganische Substanz mit Biokompatibilität darin enthält.

2. Polymergel, wie in Anspruch 1 dargelegt, wobei das Biopolymer ein Protein ist, das Biokompatibilität aufweist.

3. Polymergel, wie in Anspruch 2 dargelegt, wobei das Protein, welches Biokompatibilität aufweist, Bioaktivität auf der Oberfläche oder im Inneren des Polymergels entwickelt.

4. Polymergel, wie in Anspruch 1 dargelegt, wobei das Biopolymer eine antithrombogene Substanz ist.

5. Polymergel, wie in Anspruch 1 dargelegt, wobei die anorganische Substanz mit Biokompatibilität Hydroxyapatit ist.

6. Polymergel, wie in einem der Ansprüche 1 bis 5 dargelegt, wobei das dreidimensionale Netzwerk ohne Verwendung eines organischen Vernetzungsmittels gebildet ist.

**7.** Polymergel, wie in einem der Ansprüche 1 bis 6 dargelegt, wobei das Gewichtsverhältnis des in Wasser quellenden Tonminerals zu dem wasserlöslichen organischen Monomer im Bereich von 0,01 bis 10 liegt.

**8.** Polymergel, wie in Anspruch 1 dargelegt, wobei das Biopolymer im Bereich von 0,1 bis 30 Massen-% zu der Summengesamtmasse des Polymers des wasserlöslichen organischen Monomers und des in Wasser quellenden Tonminerals liegt.

**9.** Polymergel, wie in Anspruch 1 dargelegt, wobei das Gewichtsverhältnis der anorganischen Substanz mit Biokompatibilität im Bereich von 0,01 bis 10 zu dem Polymer des wasserlöslichen organischen Monomers liegt.

**10.** Polymergel, wie in einem der Ansprüche 1 bis 9 dargelegt, wobei das wasserlösliche organische Monomer ein wasserlösliches organisches Monomer mit einer Amidgruppe ist.

**11.** Polymergel, wie in Anspruch 10 dargelegt, wobei das wasserlösliche organische Monomer eine N-Alkylgruppesubstituierte Amidgruppe aufweist.

**12.** Polymergel, wie in einem der Ansprüche 1 bis 11 dargelegt, wobei das in Wasser quellende Tonmineral ein in Wasser quellender Smektit ist.

**13.** Polymergel, wie in einem der Ansprüche 1 bis 12 dargelegt, wobei eine Zugbruchdehnung nicht weniger als 50% beträgt und eine Bruchfestigkeit nicht weniger als 5 kPa beträgt, wenn das Massenverhältnis von Wasser zu dem wasserlöslichen organischen Monomer 10 beträgt.

**14.** Polymergel, wie in einem der Ansprüche 1 bis 13 dargelegt, wobei das Polymergel als ein medizinisches Material verwendet wird.

**15.** Getrocknetes Gel, erhalten durch Trocknung des Polymergels, wie in einem der Ansprüche 1 bis 14 dargelegt.

**16.** Verfahren zum Herstellen eines Polymergels, umfassend:

Polymerisieren eines wasserlöslichen organischen Monomers in einer gleichmäßigen Lösung, welche das wasserlösliche organische Monomer, ein in Wasser quellendes Tonmineral, ein Biopolymer oder eine anorganische Substanz mit Biokompatibilität und Wasser enthält.

**17.** Verfahren zum Herstellen eines Polymergels, wie in Anspruch 16 dargelegt, wobei das Massenverhältnis des in Wasser quellenden Tonminerals zu dem wasserlöslichen organischen Monomer im Bereich von 0,01 bis 10 liegt.

**18.** Verfahren zum Herstellen eines Polymergels, umfassend:

Bilden von Hydroxyapatit in einem Polymerhydrogel durch Imprägnieren eines Polymergels, bestehend aus einem wasserlöslichen organischen Monomer und einem in Wasser quellenden Tonmineral, mit einer wässrigen Lösung von einem Phosphorsäurealkalimetallsalz und einer wässrigen Lösung von Carbonat und zwar abwechselnd ein oder mehrere Mal(e).

**19.** Verfahren zum Herstellen des Polymergels, wie in den Ansprüchen 16 bis 18 dargelegt, wobei das wasserlösliche organische Monomer ein wasserlösliches Monomer vom Acryltyp mit einer Amidgruppe ist und das in Wasser quellende Tonmineral ein in Wasser quellender Smektit ist.

**Revendications**

**1.** Gel polymère comprenant un réseau tridimensionnel formé en complexant un polymère d'un monomère organique hydrosoluble avec un minéral argilé gonflant dans l'eau, dans lequel le réseau tridimensionnel contient un biopolymère ou une substance inorganique avec biocompatibilité dedans.

**2.** Gel polymère selon la revendication 1, dans lequel le biopolymère est une protéine avec biocompatibilité.

**3.** Gel polymère selon la revendication 2, dans lequel la protéine qui a une biocompatibilité, développe une bioactivité à la surface ou à l'intérieur du gel polymère.

4.   Gel polymère selon la revendication 1, dans lequel le biopolymère est une substance antithrombique.

5.   Gel polymère selon la revendication 1, dans lequel la substance inorganique avec biocompatibilité est l'hydroxyapatite.

6.   Gel polymère selon l'une quelconque des revendications 1 à 5, dans lequel le réseau tridimensionnel est formé en utilisant un agent réticulant organique.

7.   Gel polymère selon l'une quelconque des revendications 1 à 6, dans lequel le rapport pondéral du minéral argilé gonflant dans l'eau au monomère organique hydrosoluble est dans la gamme de 0,01 à 10.

8.   Gel polymère selon la revendication 1, dans lequel le biopolymère est dans la gamme de 0,1 à 30 % en masse de la masse totale du polymère du monomère organique hydrosoluble et du minéral argilé gonflant dans l'eau.

9.   Gel polymère selon la revendication 1, dans lequel le rapport pondéral de la substance avec biocompatibilité au polymère du monomère organique hydrosoluble est dans la gamme de 0,01 à 10.

10.   Gel polymère selon l'une quelconque des revendications 1 à 9, dans lequel le monomère organique hydrosoluble est un monomère organique hydrosoluble ayant un groupe amide.

11.   Gel polymère selon la revendication 10, dans lequel le monomère organique hydrosoluble a un groupe amide N-substitué par alkyle.

12.   Gel polymère selon l'une quelconque des revendications 1 à 11, dans lequel le minéral argilé gonflant dans l'eau est une smectite gonflante dans l'eau.

13.   Gel polymère selon l'une quelconque des revendications 1 à 12, dans lequel l'allongement à la rupture n'est pas inférieur à 50 % et la résistance à la rupture n'est pas inférieure à 5 k Pa si le rapport pondéral de l'eau au monomère organique hydrosoluble est 10.

14.   Gel polymère selon l'une quelconque des revendications 1 à 13, le gel polymère étant utilisé en tant que matériau médical.

15.   Gel séché obtenue par séchage du gel polymère selon l'une quelconque des revendications 1 à 14.

16.   Procédé de fabrication d'un gel polymère, comprenant la polymérisation d'un monomère organique hydrosoluble dans une solution homogène qui contient le monomère organique hydrosoluble, un minéral argilé gonflant dans l'eau, un biopolymère ou une substance inorganique avec biocompatibilité dedans.

17.   Procédé de fabrication d'un gel polymère selon la revendication 16, dans lequel le rapport de masses du minéral argilé gonflant dans l'eau au monomère organique hydrosoluble est dans la gamme de 0,01 à 10.

18.   Procédé de fabrication d'un gel polymère, comprenant la préparation d'un hydroxyapatite dans un hydrogel polymère en imprégnant une solution aqueuse d'un sel de métal alcalin d'acide phosphorique et d'une solution aqueuse de carbonate alternativement une fois ou plusieurs fois avec un gel polymère constitué d'un monomère organique hydrosoluble et un minéral argilé gonflant dans l'eau.

19.   Procédé de fabrication d'un gel polymère selon les revendications 16 à 18, dans lequel le monomère organique hydrosoluble est un monomère hydrosoluble du type acrylique ayant un groupe amide et le minéral argilé gonflant est une smectite gonflante dans l'eau.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002201252 A
- JP 2003038046 A
- JP 2003163539 A
- US 5314420 A
- JP 2002053629 A
- WO 9420547 A
- EP 1160286 A1

**Non-patent literature cited in the description**

- Gel Handbook. **Yoshihito Nagata ; Kanji Kajiwara.** N.T.S. 1997
- Yoshihito Nagata, Mitsuo Takase. Chemical Society of Japan, 1983, vol. 3, 439
- **T. Takigawa.** *Journal of Chemical Physics,* 2000, vol. 113 (17), 7640-7645
- **Shoji Oya et al.** Society of Polymer Science, Japan drafts. vol. 50, 2180